# EUROPÄISCHE PATENTSCHRIFT

(11) **EP 3 483 478 B1**
(45) Veröffentlichungstag und Bekanntmachung des Hinweises auf die Patenterteilung: **16.09.2020**
(21) Anmeldenummer: 18203450.4
(22) Anmeldetag: 30.10.2018
(51) Int. Cl.: F16H 55/18

(54) **RÄDERTRIEB**
GEAR WHEEL DRIVE
ENTRAÎNEMENT DE ROUE

(30) Priorität: 09.11.2017 DE 102017126205
(43) Veröffentlichungstag der Anmeldung: 15.05.2019
(73) Patentinhaber: MAN Truck & Bus SE, 80995 München (DE)
(72) Erfinder: Türk, Jens, 92353 Postbauer-Heng (DE); Viet, Marcus, 36088 Hünfeld_sargenzell (DE)
(74) Vertreter: v. Bezold & Partner Patentanwälte - PartG mbB

(56) Entgegenhaltungen:
- DE-A1-102009 015 947
- DE-A1-102009 055 214
- DE-U1- 20 102 749
- FR-A- 1 559 798

## Beschreibung

Die Erfindung betrifft ein Zahnrad, insbesondere Zwischenrad, zur Zahnflankenspielverringerung in einem Rädertrieb.

Zahnradgetriebe, die stark wechselnden Drehmomenten ausgesetzt sind, neigen zum Getrieberasseln bei niedrigen Motordrehzahlen und zum Getriebepfeifen bei hohen Motordrehzahlen. Besonders ausgeprägt tritt diese Erscheinung beim Antrieb von Luftpressern an Motoren von Nutzfahrzeugen auf. Kolbenluftpresser haben die Eigenschaft, dass sich das Vorzeichen des Drehmoments nach dem Überschreiten des oberen Totpunktes durch Rückexpansion kurzzeitig umkehrt. Die Folge ist ein Aufeinanderschlagen der Zahnflanken und das daraus resultierende akustische Rasseln.

Die DE 100 58 482 A1 schlägt hierzu ein Zahnrad zur Drehimpulsdämpfung vor. Ungewünschte Geräusche werden dadurch vermieden, dass ein Zahnrad aus zwei Radteilen gebildet ist, die über ein Elastomer drehmomentschlüssig verbunden sind. Im unverbauten Zustand sind die Zähne der Radteile gegeneinander verdreht. Nach dem Einbau des Zahnrades sind die Radteile so zueinander verdreht, dass die Zähne nahezu fluchten. Das wird dadurch erreicht, dass die Zähne eines mit dem Zahnrad kämmenden weiteren Zahnrades die Zähne der Radteile in dieser Lage halten. Durch das Elastomer wird als Folge der Verdrehung und des daraus resultierenden Rückstellmomentes eine dauerhafte Vorspannung erzeugt, so dass die Zahnflanken der Radteile und des damit kämmenden Zahnrades stets in formschlüssigem Kontakt stehen. Bei Rädertrieben, in denen zwei Zahnräder im Eingriff sind, ist die Funktion, bei Anwendung am Antriebs- oder Abtriebsrad, vollumfänglich gegeben. Bei Rädertrieben, in denen drei Zahnräder im Eingriff sind und bei denen das mehrteilige Zahnrad als Zwischenrad Anwendung findet, ist die Funktion nicht mehr vollumfänglich gegeben. Am geteilten Zahnrad kann hier konzeptionell nachteilig sein, dass dieses lediglich die Effekte dämpft.

Die DE 10 2009 015 947 A1 offenbart eine rasselfreie Bauteilpaarung mit einem ersten Bauteil mit einer ersten Bauteilverzahnung und einem zweiten Bauteil mit einer zweiten Bauteilverzahnung, die mit der ersten Bauteilverzahnung in Eingriff steht, um über die Bauteilverzahnungen eine Antriebskraft in einer Antriebsrichtung übertragen zu können. Dem ersten Bauteil ist ferner eine erste Antirasselverzahnung zugeordnet, wobei an dem zweiten Bauteil ein Antirasselbauteil befestigt ist, das eine zweite Antirasselverzahnung aufweist, die mit der ersten Antirasselverzahnung in Eingriff steht. Das Antirasselbauteil ist in radialer Richtung elastisch verformbar ausgebildet und/oder elastisch gelagert, wobei sich eine Mehrzahl von kragarmenförmigen Federstegen zwischen dem Antirasselbauteil und dem zweiten Bauteil erstreckt.

Die DE 201 02 749 U1 offenbart ein verzahntes Rad zum Führen und/oder Antreiben von Endlostreibelementen, wie Ketten, Zahnriemen etc., das zumindest bereichsweise einen Schichtaufbau aufweist.

DE102009055214 offenbart einen Rädertrieb mit einem Antriebsrad 3, einem Zwischenrad 2 und einem Abtriebsrad 4.

Der Erfindung liegt die Aufgabe zu Grunde, ein alternatives oder verbessertes Zahnrad für einen Rädertrieb zu schaffen, das, insbesondere bei Anwendung als Zwischenrad, eine wirksame Zahnflankenspielverringerung oder -kompensation ermöglicht. Insbesondere als Zwischenrad soll hiermit die Möglichkeit geschaffen werden, das Zahnflankenspiel an einem antreibenden Rad und einem getriebenen Rad über das Zwischenrad zu verringern oder zu kompensieren.

Die Aufgabe wird gelöst durch ein Zahnrad und einen Rädertrieb gemäß den unabhängigen Ansprüchen. Vorteilhafte Weiterbildungen sind in den abhängigen Ansprüchen und der Beschreibung angegeben.

Das Zahnrad kann insbesondere ein Zwischenrad sein. Das Zahnrad ist zur Zahnflankenspielverringerung und/oder Zahnflankenspielkompensation in einem Rädertrieb geeignet. Das Zahnrad weist einen ersten Radteil mit mehreren Zähnen, die über einen Umfang des ersten Radteils verteilt sind, auf. Der erste Radteil ist um eine erste Achse drehbar. Das Zahnrad weist einen zweiten Radteil mit mehreren Zähnen, die über einen Umfang des zweiten Radteils verteilt sind, auf. Der zweite Radteil ist um eine zweite Achse, die parallel versetzt zur ersten Achse angeordnet ist, drehbar.

Die parallele Anordnung der ersten Achse und der zweiten Achse bewirkt, dass der zweite Radteil exzentrisch zum ersten Radteil gelagert ist. Das Drehzentrum des ersten Radteils und das Drehzentrum des zweiten Radteils sind im Einbauzustand in einer radialen Richtung um den Abstand der ersten Achse zur zweiten Achse versetzt. Dadurch kann zwischen den mehreren Zähnen des ersten Radteils und den mehreren Zähnen des zweiten Radteils eine Versetzung in Umfangsrichtung erzeugt werden (die Zähne fluchten nicht miteinander). Damit kann das Zahnrad als ein Zwischenrad in einem Rädertrieb zur Zahnflankenspielverringerung oder -kompensation eingesetzt werden, wobei der Zahnlastflankenwechsel vom Antriebsrad auf das Zwischenrad und vom Zwischenrad auf das Abtriebsrad berücksichtigt wird. Die Zahnflanken der Zähne des ersten Radteils werden in Anlage zu den Lastflanken eines Antriebsrads und eines Abtriebsrads des Rädertriebs zur Übertragung eines Drehmoments von dem Antriebsrad über das Zwischenrads zu dem Abtriebsrad gebracht. Die exzentrische Lagerung des zweiten Radteils ermöglicht, dass die Zähne des zweiten Radteils und des ersten Radteils so zueinander versetzt werden, dass die Zahnflanken des zweiten Radteils in Eingriff mit den Rückflanken des Antriebsrads und des Abtriebsrads gelangen.

Insbesondere können die Zähne des ersten Radteils über einen Außenumfang des ersten Radteils gleichmäßig verteilt sein. Alternativ oder zusätzlich können die Zähne des zweiten Radteils über einen Außenumfang des zweiten Radteils gleichmäßig verteilt sein. Vorzugsweise kann eine Anzahl der mehreren Zähne des ersten Radteils einer Anzahl der mehreren Zähne des zweiten Radteils entsprechen.

Bevorzugt können die mehreren Zähne des ersten Radteils und die mehreren Zähne des zweiten Radteils gleich aufgebaut sein.

In einem besonders bevorzugten Ausführungsbeispiel ist der zweite Radteil bereichsweise in einer Radialrichtung bezüglich der zweiten Achse elastisch verformbar. Beispielsweise kann der zweite Radteil bereichsweise aus einem elastischen Material hergestellt sein, ein elastisches Element und/oder eine elastische Struktur aufweisen. Die Elastizität des zweiten Radteils ermöglicht in Kombination mit der exzentrischen Position des Drehzentrums des zweiten Radteils dessen Verspannung zwischen den Rückflanken des Antriebsrads, den Rückflanken des Abtriebsrads und dem Lager des zweiten Radteils. Zusätzlich kann sich der zweite Radteil elastisch verformen, um sich den aus den Fertigungstoleranzen ergebenden Lagen der Rückflanken von An- und Abtriebsrad anzupassen. Insbesondere soll der zweite Radteil sich bei einem Vorzeichenwechsel des Antriebsmomentes oder Abtriebsmomentes nicht elastisch verformen. Das Ziel ist es, das Abheben der Lastflanken zu verhindern. Dies wird erreicht, indem die Vorspannkraft aus dem exzentrischen Sitz des Drehzentrums des zweiten Radteils sowie dessen Elastizität den negativen Anteil des Drehmomentes kompensiert und es damit in diesem Moment zu keiner elastischen Verformung des zweiten Radteils bzw. dem Abheben der Lastflanken kommt. Die Elastizität des zweiten Radteiles wirkt sich jedoch positiv auf die Anpassung an die Fertigungstoleranzen und das sich in der Praxis ergebende Zahnflankenspiel aus. Alternativ könnte dies auch über die Verschraubung des ersten und des zweiten Lagerbolzens sichergestellt werden.

In einem Ausführungsbeispiel ist der zweite Radteil relativ zum ersten Radteil drehbar. Insbesondere kann der erste Radteil massiv ausgebildet sein.

In einem bevorzugten Ausführungsbeispiel weist der zweite Radteil mindestens ein Zahnradblech auf. Das mindestens eine Zahnradblech ist in einer Radialrichtung bezüglich der zweiten Achse elastisch verformbar. Die Verwendung von Zahnradblechen, die beispielsweise eine Materialstärke von ungefähr 1 mm aufweisen, ermöglicht die Integration der Elastizität in die Struktur der Zahnradbleche, zum Beispiel durch Vorsehen von Langlöchern in den Zahnradblechen.

In einer Weiterbildung sind mehrere Zahnradbleche vorgesehen, die nebeneinander angeordnet sind und/oder ein Zahnradblechpaket bilden.

Vorzugsweise können die Zahnradbleche in einer Axialrichtung fluchtend zueinander ausgerichtet sein.

In einem weiteren Ausführungsbeispiel ist der zweite Radteil und/oder das mindestens eine Zahnradblech aus einem Federstahl hergestellt. Durch Vorsehen entsprechender Strukturen kann somit eine bereichsweise Elastizität gewährleistet werden.

In einer Ausführungsform weist das mindestens eine Zahnradblech zum Vorsehen einer Elastizität des zweiten Radteils mindestens ein Langloch, vorzugsweise mehrere Langlöcher, auf. Das mindestens eine Langloch erstreckt sich in einer Umfangsrichtung um die zweite Achse, insbesondere kreisförmig und/oder spiralförmig.

In einer weiteren Ausführungsform weist das Zahnrad einen erster Radbolzen, um den der erste Radteil drehbar gelagert ist, auf. Alternativ oder zusätzlich weist das Zahnrad einen zweiten Radbolzen, um den der zweite Radteil drehbar gelagert ist, auf. Vorzugsweise können der erste Radbolzen und der zweite Radbolzen aneinander exzentrisch zueinander befestigt sein, insbesondere über eine Presspassung.

In einer Weiterbildung weist das Zahnrad eine erste Gleitlagerbuchse, die zwischen dem ersten Radbolzen und dem ersten Radteil angeordnet ist, auf. Alternativ oder zusätzlich weist das Zahnrad eine zweite Gleitlagerbuchse, die zwischen dem zweiten Radbolzen und dem zweiten Radteil angeordnet ist, auf.

Zum Schmieren der Gleitlagerbuchsen kann ein insbesondere zentraler Schmierkanal in dem ersten Radbolzen und/oder dem zweiten Radbolzen vorgesehen sein. Vorzugsweise können sich von dem Schmierkanal ein erster Radialkanal zu der ersten Gleitlagerbuchse und/oder ein zweiter Radialkanal zu der zweiten Gleitlagerbuchse zum Zuführen eines Schmierfluids erstrecken. Beispielsweise kann ein Schmierfluid zu dem Schmierkanal über Kanäle in einem Kurbelgehäuse der Brennkraftmaschine zugeführt werden. Beispielsweise kann der erste Radialkanal und/oder der zweite Radialkanal in dem ersten Radbolzen, zwischen dem ersten Radbolzen und dem zweiten Radbolzen oder in dem zweiten Radbolzen vorgesehen sein.

Es ist auch möglich, dass das Zahnrad mindestens einen weiteren Radteil aufweist, der jeweils entsprechend dem zweiten Radteil des Zwischenrads ausgebildet sein kann. Damit können bspw. bei mehreren Abtriebsrädern für jedes Abtriebsrad ein eigener "zweiter" Radteil vorgesehen werden.

Die Erfindung betrifft auch einen Rädertrieb für ein Kraftfahrzeug. Der Rädertrieb weist ein Zwischenrad auf, das ein Zahnrad wie hierin offenbart ist. Der Rädertrieb weist ein Antriebsrad auf, das mit dem ersten Radteil des Zwischenrads und dem zweiten Radteil des Zwischenrads kämmt. Der Rädertrieb weist ein Abtriebsrad, auf, das mit dem ersten Radteil des Zwischenrads und dem zweiten Radteil des Zwischenrads kämmt. Der Rädertrieb kann die hierin für das Zahnrad beschriebenen Vorteile erzielen.

In einer bevorzugten Ausführungsvariante ist der zweite Radteil des Zwischenrads von dem Antriebsrad, insbesondere von Rückflanken des Antriebsrads, und dem Abtriebsrad, insbesondere von Rückflanken des Abtriebsrads, in einer Richtung zu der zweiten Achse, insbesondere elastisch, verspannt.

In einer weiteren bevorzugten Ausführungsvariante sind Lastflanken des Antriebsrads und Lastflanken des Abtriebsrads in Eingriff mit dem ersten Radteil. Alternativ oder zusätzlich sind Rückflanken des Antriebsrads und Rückflanken des Abtriebsrads in Eingriff mit dem zweiten Radteil.

In einer weiteren Ausführungsvariante ist die zweite Achse bezüglich der ersten Achse in einer Richtung einer Winkelhalbierenden bezüglich eines Winkels, der zwischen einer Drehachse des Antriebsrads, der ersten Achse und einer Drehachse des Abtriebsrads definiert ist, versetzt angeordnet. Diese versetzte Anordnung ermöglicht es, dass die Zahnflanken des zweiten Radteils in Anlage zu den Rückflanken sowohl des Antriebsrads als auch des Abtriebsrads gebracht werden können.

In einer Ausführungsform kontaktieren die mehreren Zähne des ersten Radteils Lastflanken des Antriebszahnrads und Lastflanken des Abtriebszahnrads. Alternativ oder zusätzlich kontaktieren die mehreren Zähne des zweiten Radteils Rückflanken des Antriebszahnrads und Rückflanken des Abtriebszahnrads.

Insbesondere können sich die Lastflanken und die Rückflanken des Antriebszahnrads gegenüberliegen. Gleichermaßen können sich die Lastflanken und die Rückflanken des Abtriebszahnrads gegenüberliegen.

In einer weiteren Ausführungsform wird durch eine Verspannung des zweiten Radteils, die insbesondere aus der versetzten Anordnung zwischen dem ersten Radteil und dem zweiten Radteil und einer Elastizität des zweiten Radteils resultiert, einem Abheben der mehreren Zähne des ersten Radteils von Lastflanken des Antriebsrads und von Lastflanken des Abtriebsrads bei einem Vorzeichenwechsel des Antriebsmoments und/oder des Abtriebsmoments und/oder bei Drehschwingungen entgegenwirkt.

In einem Ausführungsbeispiel sind mehrere Abtriebsräder vorgesehen, die mit dem Zwischenrad kämmen. Für jedes Abtriebsrad ist ein weiterer Radteil des Zwischenrads vorgesehen, der jeweils entsprechend dem zweiten Radteil des Zwischenrads ausgebildet ist.

Die Erfindung betrifft auch ein Kraftfahrzeug, insbesondere ein Nutzfahrzeug (zum Beispiel ein Lastkraftwagen oder ein Omnibus). Das Kraftfahrzeug weist einen Rädertrieb wie hierin offenbart auf. Optional weist das Kraftfahrzeug einen Verdichter zum Verdichten von Luft auf, der über den Rädertrieb angetrieben wird.

Es ist auch möglich, das Zahnrad wie hierin offenbart und/oder den Rädertrieb wie hierin offenbart in jeglicher anderer Maschine einzusetzen.

Insbesondere ist es auch möglich, das Zahnrad wie hierin offenbart und/oder den Rädertrieb wie hierin offenbart bei anderen angetriebenen Aggregaten einzusetzen, die einen Drehmomentverlauf mit Vorzeichenwechsel aufweisen.

Ferner kann das Zahnrad wie hierin offenbart und/oder der Rädertrieb wie hierin offenbart, auch zur Verminderung und/oder Verhinderung einer Übertragung von Drehschwingungen einer Kurbelwelle einer Brennkraftmaschine eingesetzt werden.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: ein schematisches Modell eines Rädertriebs in einer Explosionsdarstellung;
- Figur 2: eine Vorderansicht auf das schematische Modell eines Rädertriebs;
- Figur 3: eine weitere Vorderansicht auf das schematische Modell eines Rädertriebs im unmontierten Zustand;
- Figur 4: eine Vorderansicht eines Zwischenrads gemäß einem Ausführungsbeispiel;
- Figur 5: eine Schnittansicht des Zwischenrads entlang einer Linie A-A in Figur 4; und
- Figur 6: eine Explosionsdarstellung des Zwischenrads gemäß dem Ausführungsbeispiel.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

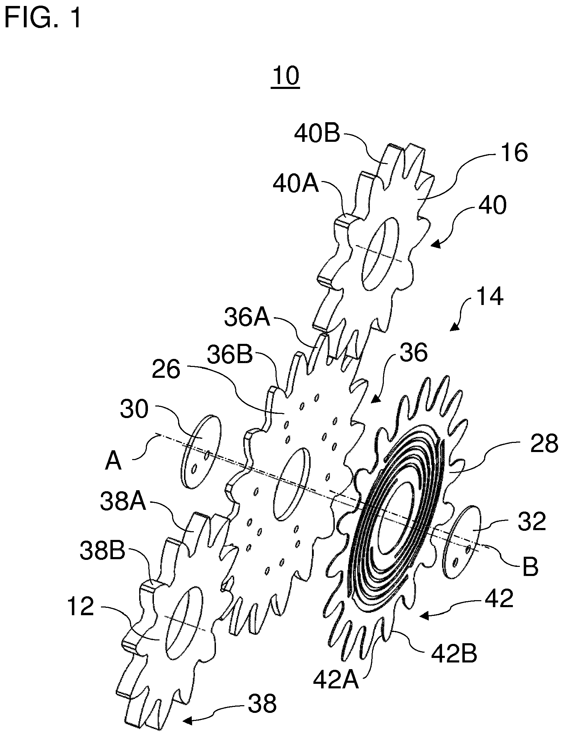

In den Figuren 1 bis 3 ist ein schematisches Modell eines Rädertriebs 10 gemäß der vorliegenden Offenbarung in verschiedenen Ansichten zur Erläuterung der Funktionsweise des Rädertriebs 10 dargestellt.

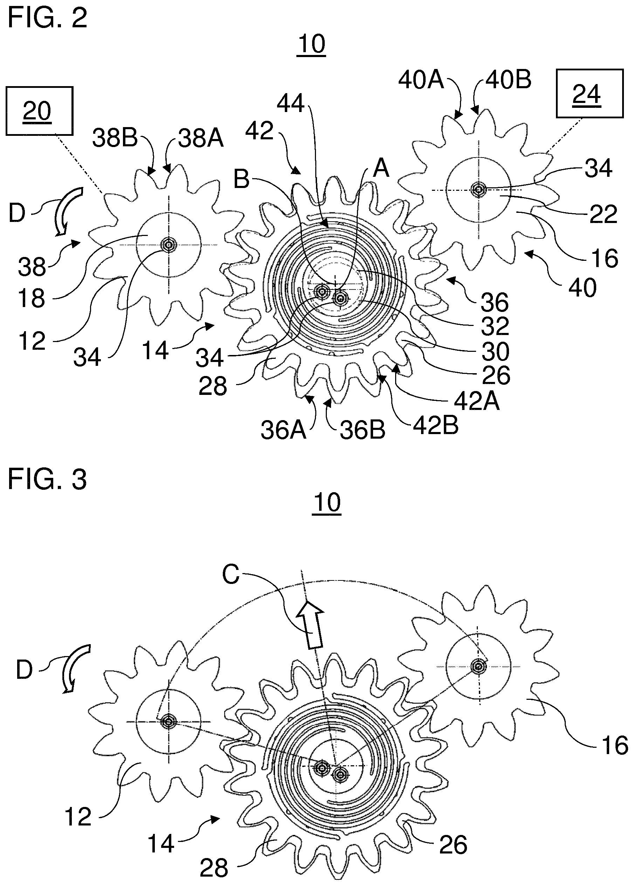

Unter Bezugnahme auf Figur 1 und 2 ist nachfolgend ein beispielhafter Aufbau des Rädertriebs 10 beschrieben.

Der Rädertrieb 10 weist ein Antriebsrad 12, ein Zwischenrad 14 und Abtriebsrad 16 auf. Das Antriebsrad 12 kämmt mit dem Zwischenrad 14, das wiederum mit dem Abtriebsrad 16 kämmt. Es ist auch möglich, dass mehrere Abtriebsräder 16 mit dem Zwischenrad 14 kämmen.

Das Antriebsrad 12, das Zwischenrad 14 und das Abtriebsrad 16 sind jeweils drehbar auf entsprechenden Radbolzen gelagert. Die Radbolzen der Zahnräder 12, 14 und 16 sind beispielsweise über Schrauben 34 (siehe Figur 2) am Kurbelgehäuse der Brennkraftmaschine befestigt.

Das Antriebsrad 12 ist drehbar auf einem Radbolzen 18 (siehe Figur 2) gelagert. Das Antriebsrad 12 kann beispielsweise von einer Kurbelwelle 20 (schematisch in Figur 2 dargestellt) einer Brennkraftmaschine eines Kraftfahrzeugs angetrieben werden. Das Kraftfahrzeug kann beispielsweise ein Nutzfahrzeug, insbesondere ein Omnibus oder ein Lastkraftwagen, sein. Es ist auch möglich, dass das Antriebsrad 12 anderweitig angetrieben ist.

Das Abtriebsrad 16 ist drehbar auf einem Radbolzen 22 (siehe Figur 2) gelagert. Das Abtriebsrad 16 kann beispielsweise zum Antreiben eines Nebenverbrauchers 24 (schematisch in Figur 2 dargestellt) des Kraftfahrzeugs dienen. Insbesondere kann der Nebenverbraucher 24 aufgrund seiner Funktionsweise und/oder Konfiguration zu Drehungleichförmigkeiten und Drehschwingungen in Form eines Drehmomentenverlaufs mit Vorzeichenwechsel neigen.

Der Nebenverbraucher 24 kann beispielsweise eine Ölpumpe, eine Hydraulikpumpe oder ein Luftverdichter sein. Herkömmlich weist beispielsweise der Luftverdichter (auch Lufterpresser genannt) eines Nutzfahrzeugs ein ungleichförmiges Abtriebsmoment mit Vorzeichenwechsel auf, welches aus dessen Bauart resultiert. Der Luftverdichter kann beispielsweise nach dem Prinzip eines Tauchkolbenverdichters arbeiten. Luft wird durch ein Einlassventil des Luftverdichters angesaugt, in einem Zylinder des Luftverdichters durch einen Kolben des Luftverdichters verdichtet und über ein Auslassventil des Luftverdichters ausgeschoben. Bauartbedingt verbleibt ein Rest verdichteter Luft nach dem Ausschieben im Zylinder. Diese Restluft expandiert nach dem Überschreiten des oberen Totpunkts einer Kolbenbewegung des Kolbens und gibt Energie über eine Antriebskinematik des Luftverdichters zurück.

Weitere Drehungleichförmigkeiten und Drehschwingungen im Rädertrieb 10 resultieren bspw. aus einem ungleichförmigen Drehmomentverlauf der Kurbelwelle 20 der Brennkraftmaschine. Vereinfacht gesagt, resultiert aus dem Zusammenspiel der Gaskraft in einem Zylinder und der Massenkraft der Kinematik eine wechselnder Drehmomentverlauf über den Kurbelwinkelbereich von 720°. Diese Einzelverläufe werden bei Mehrzylindermotoren zu einem Gesamtverlauf überlagert, der Minima und Maxima aufweist. Die Charakteristik dieses Drehmomentverlaufs ist bspw. abhängig von einer Zylinderzahl, einem Zünddruck und der Verbrennung.

Werden keine Gegenmaßnahmen zur Verringerung oder Kompensation des Zahnflankenspiels unternommen, so kann es aufgrund der Vorzeichenwechsel der Antriebsmomente und Abtriebsmomente zu einem Abheben der Lastflanken der Zahnräder des Rädertriebs innerhalb des Zahnflankenspiels kommen. Aus dem anschließenden Aufschlagen der Zahnflanken aufeinander resultieren störende Geräusche und ein erhöhter Verschleiß.

Die vorliegende Offenbarung kompensiert oder verringert zumindest das Zahnflankenspiel zwischen dem Antriebsrad 12 und dem Zwischenrad 14 und zwischen dem Zwischenrad 14 und dem Abtriebsrad 16, sodass ein erhöhter Verschleiß und störende Geräusche verhindert oder zumindest verringert werden.

Dazu weist das Zwischenrad 14 einen ersten Radteil 26 und einen zweiten Radteil 28 auf.

Der erste Radteil 26 ist drehbar um eine erste Achse A (siehe Figur 2) gelagert. Der zweite Radteil 28 ist drehbar um eine zweite Achse B (siehe Figur 2) gelagert, die versetzt und parallel zu der ersten Achse A angeordnet ist.

Unter Bezugnahme auf Figur 2 ist gezeigt, dass die zweite Achse B des zweiten Radteils 28 in einer Radialrichtung der ersten Achse A des ersten Radteils 26 versetzt zu der ersten Achse A angeordnet wird. Im Einzelnen wird der zweite Radteil 28 entlang eines Pfeils C versetzt. Der Pfeil C erstreckt sich entlang einer Winkelhalbierenden. Die Winkelhalbierende halbiert einen Winkel, der zwischen einer Drehachse des Antriebsrads 12, der ersten Achse A und einer Drehachse des Abtriebsrads 16 definiert wird. Die Winkelhalbierende verläuft durch die erste Achse A. Wie nachfolgend im Detail beschrieben ist, wird der zweite Radteil 28 so versetzt zu dem ersten Radteil 26 angeordnet, das Zahnflanken des zweiten Radteils 28 Rückflanken des Antriebsrads 12 und des Abtriebsrads 16 kontaktieren. Das Drehzentrum des ersten Radteils 26 (Achse A) und das Drehzentrum des zweiten Radteils 28 (Achse B) sind im Einbauzustand in einer radialen Richtung um den Abstand der ersten Achse A zur zweiten Achse B versetzt. Dadurch wird zwischen den mehreren Zähnen 36 des ersten Radteils 26 und den mehreren Zähnen 42 des zweiten Radteils 28 eine Versetzung in Umfangsrichtung erzeugt.

Unter erneuter Bezugnahme auf Figur 2 ist gezeigt, dass der der erste Radteil 26 insbesondere um einen ersten Radbolzen 30 des Zwischenrads 14 drehbar gelagert ist. Der erste Radbolzen 30 weist die erste Achse A als Mittelachse auf. Die Position der ersten Achse A und damit des ersten Radteils 26 richtet sich dabei nach den Betriebswälzkreisen der klassischen Verzahnungsauslegung zwischen dem Antriebsrads 12, dem Zwischenrad 14 und dem Abtriebsrad 16. Der zweite Radteil 28 ist insbesondere um einen zweiten Radbolzen 32 drehbar gelagert. Der zweite Radbolzen 32 weist die zweite Achse B als Mittelachse auf. Der erste Radteil 26 ist relativ zum zweiten Radteil 28 drehbar.

Der erste Radbolzen 30 und der zweite Radbolzen 32 können aneinander mittels Schrauben 34 befestigt sein. Es ist allerdings bspw. auch eine Presspassung zwischen den Radbolzen 30, 32 möglich. Die Schrauben 34 können die Radbolzen 18, 22, 30 und 32 beispielsweise an einem Kurbelgehäuse der Brennkraftmaschine befestigen.

Der erste Radteil 26 weist an einem Außenumfang davon mehrere gleichmäßig über den Außenumfang verteilte Zähne 36 auf. Die Zähne 36 kämmen mit Zähnen 38 des Antriebsrads 12 und mit Zähnen 40 des Abtriebsrads 16. Im Normalbetrieb dreht sich das Antriebsrad 12 beispielsweise entgegen dem Uhrzeigersinn in einer Drehrichtung D (siehe Figuren 2 und 3). Das Antriebsrad 12 treibt das Zwischenrad 14 an. Das Zwischenrad 14 dreht sich mit dem Uhrzeigersinn. Dabei kämmen Lastflanken 38A der Zähne 38 des Antriebsrads 12 mit ersten Lastflanken 36A der Zähne 36 des ersten Radteils 26 des Zwischenrads 14. Das Zwischenrad 14 treibt wiederum das Abtriebsrad 16 an. Das Abtriebsrad 16 dreht sich entgegen dem Uhrzeigersinn. Dabei kämmen zweite Lastflanken 36B, die den ersten Lastflanken 36A gegenüberliegen, des ersten Radteils 26 des Zwischenrads 14 mit Lastflanken 40Ades Abtriebsrads 16. Montagebedingt und damit die Zahnräder 12, 14 frei laufen können, besteht zwischen Rückflanken 38B des Antriebsrads 12, die den Lastflanken 38A gegenüberliegen, und den zweiten Lastflanken 36B des ersten Radteils 26 des Zwischenrads 14 ein Zahnflankenspiel. Ebenso besteht montagebedingt und damit die Zahnräder 14, 16 frei laufen können, zwischen Rückflanken 40B des Abtriebsrads 16, die den Lastflanken 40A gegenüberliegen, und den ersten Lastflanken 36A des ersten Radteils 26 des Zwischenrads 14 ein Zahnflankenspiel. Dieses Zahnflankenspiel kann durch den zweiten Radteil 28 des Zwischenrads 14 kompensiert oder zumindest deutlich verringert werden.

Der zweite Radteil 28 weist an einem Außenumfang davon mehrere gleichmäßig über den Außenumfang verteilte Zähne 42 auf. Der zweite Radteil 28 ist so zwischen dem Antriebsrad 12, dem Abtriebsrad 16 und dem zweiten Radbolzen 32 verspannt, das erste Zahnflanken 42A der Zähne 42 des zweiten Radteils 28 des Zwischenrads 14 mit den Rückflanken 38B der Zähne 38 des Antriebsrads 12 kämmen. Zusätzlich kämmen zweite Zahnflanken 42B der Zähne 42 des zweiten Radteils 28 des Zwischenrads 14 mit den Rückflanken 40B der Zähne 40 des Abtriebsrads 16.

Der zweite Radteil 28 weist einen elastischen Bereich 44 auf. Der elastische Bereich 44 kann beispielsweise durch Langlöcher, die sich beispielsweise spiralförmig um die zweite Achse B erstrecken, ausgebildet werden. Der zweite Radteil 28 kann beispielsweise aus einem Federstahl hergestellt sein. Aufgrund des elastischen Bereichs 44 ist der zweite Radteil 28 in einer Radialrichtung zu der zweiten Achse B hin elastisch verformbar.

Wie vorstehend im Detail erläutert wurde, ist das Drehzentrum des zweiten Radteils 28 exzentrisch zum Drehzentrum des ersten Radteils 26 angeordnet. Zusätzlich ist der zweite Radteil 28 bereichsweise elastisch verformbar. Die durch die Exzentrizität und die Elastizität des zweiten Radteils 28 generierte Vorspannkraft zwischen dem zweiten Radteil 28 einerseits und dem Antriebsrad 12 und Abtriebsrad 16 andererseits verhindert das Abheben der Lastflanken der Zahnräder 12, 14 und 16. Hiermit kann die Entstehung von ungewünschten akustischen Emissionen und vergrößerter Verschleiß an den Zahnflanken vermieden werden. Mit anderen Worten gesagt, das Zwischenrad 14 kann durch den exzentrisch versetzten zweiten Radteil 28 die Effekte des Flankenspiels am Antriebsrad 12 und am Abtriebsrad 16 bei entsprechender Auslegung kompensieren. Die Vorspannkraft wird durch die Elastizität am zweiten Radteil 28 sowie den exzentrischen Versatz des Drehzentrums des zweiten Radteils 28 relativ zum ersten Radteil 26 gewährleistet und ist notwendig, um das Abheben an den Lastflanken zu vermeiden. Die Größe der Verspannung des zweiten Radteils 28 kann durch die Exzentrizität und/oder die Elastizität des zweiten Radteils 28 realisiert und eingestellt werden. Die Dimensionierung dieser Parameter erfolgt in Abhängigkeit von der Größe der Flankenspiele zwischen den kämmenden Rädern 12; 14 und 16 und der negativen Anteile des zu übertragenden Drehmoments.

Es wird darauf hingewiesen, dass die Exzentrizität des Drehzentrums des zweiten Radteils 28 bezüglich des Drehzentrums des ersten Radteils 26 (d.h. die Achsen A und B sind parallel versetzt zueinander) notwendig ist, damit die Zahnflanken 42A des zweiten Radteils 28 an den Rückflanken 38B des Antriebsrads 12 anliegen und gleichzeitig die Zahnflanken 42B des zweiten Radteils 28 an den Rückflanken 40B des Abtriebszahnrads 16 anliegen. Diese Funktion wäre mit einem konzentrisch zum ersten Radteil gelagertem zweiten Radteil nicht realisierbar. Bei einer Verspannung in Form einer Verdrehung in Umfangsrichtung eines konzentrisch zum ersten Radteil gelagerten zweiten Radteils würde nur eine der Zahnflanken des zweiten Radteils an einer Rückflanke des Antriebsrads (oder des Abtriebsrads) zur Anlagen kommt. Die andere Zahnflanke des zweiten Radteils käme hingegen aufgrund eines Flankenwechsels an einer Lastflanke des Abtriebsrads (oder des Antriebsrads) zur Anlage.

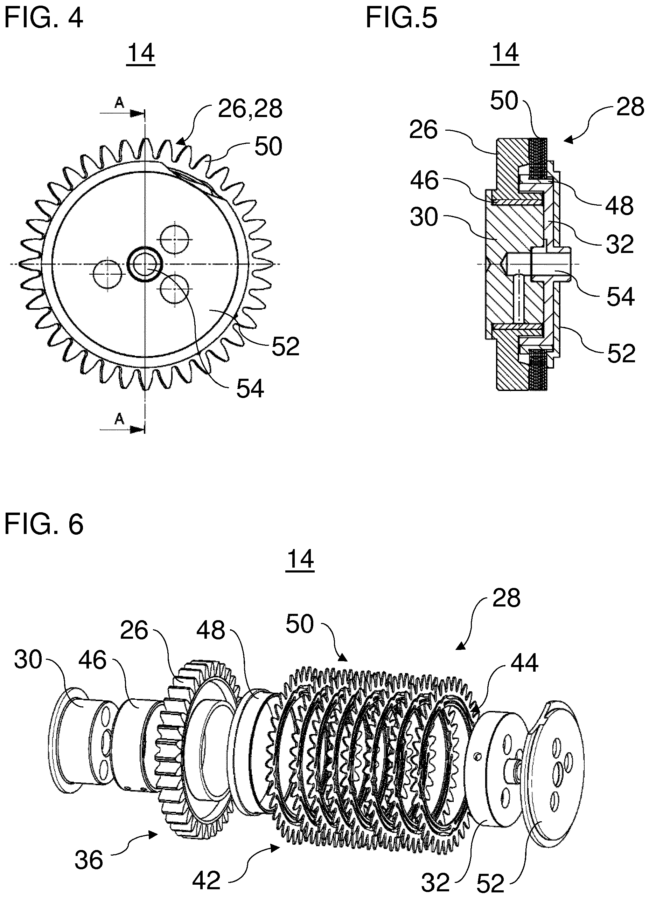

Nachfolgend ist unter Bezugnahme auf die Figuren 4 bis 6 ein Ausführungsbeispiel des Zwischenrads 14 beschrieben, das auf dem unter Bezugnahme auf die Figuren 1 bis 3 beschriebenen Modell des Rädertriebs 10 basiert.

Das Zwischenrad 14 weist den ersten Radteil 26 und den zweiten Radteil 28 auf. Der erste Radteil 26 ist über eine erste Gleitlagerbuchse 46 drehbar auf dem ersten Radbolzen 30 gelagert. Der zweite Radteil 28 ist über eine zweite Gleitlagerbuchse 48 drehbar auf den zweiten Radbolzen 32 gelagert. Der erste Radteil 26 und der zweite Radteil 28 sind relativ zueinander drehbar. Der Versatz der Zähne 36 des ersten Radteils 26 und der Zähne 42 des zweiten Radteils 28 sowie die exzentrische Anordnung des Drehzentrums des zweiten Radteils 28 bezüglich des Drehzentrums des ersten Radteils 26 sind in typischen Anwendungsbeispielen, wie dem in den Figuren 4 bis 6 gezeigten Ausführungsbeispiel, kaum sichtbar.

Im Ausführungsbeispiel ist der erste Radteil 26 massiv ausgebildet. Der zweite Radteil 28 ist aus einem Paket von mehreren (acht im Ausführungsbeispiel) nebeneinander angeordneten Zahnradblechen 50 gebildet. Die Zahnradbleche 50 können beispielsweise eine Materialstärke von 1 mm aufweisen. Die Zahnradbleche 50 sind in einer Axialrichtung fluchtend zueinander ausgerichtet. Die Zahnradbleche 50 sind in einer Radialrichtung bezüglich einer Drehachse des zweiten Radteils 28 elastisch verformbar. Zum Vorsehen der Elastizität der Zahnradbleche 50 weisen diese mehrere Langlöcher 44 auf. Die Langlöcher 44 erstrecken sich kreisförmig oder spiralförmig in einer Umfangsrichtung um die Drehachse des zweiten Radteils 28. Insbesondere können die Zahnradbleche 50 aus einem Federstahl hergestellt sein.

Das Zwischenrad 14 weist zusätzlich eine Anlaufscheibe 52 auf. Die Radbolzen 30, 32 können über mehrere Schrauben (nicht dargestellt) an einem Kurbelgehäuse der Brennkraftmaschine befestigt werden. Die Radbolzen 30, 32 können aneinander über eine Presspassung befestigt sein. Die Anlaufscheibe 52 kann mit einer Presspassung auf dem zweiten Radbolzen 32 sitzen. Dadurch kann das Zwischenrad 14 als eine Einheit montiert werden. Die Anlaufscheibe 52 stützt die Zahnradbleche 50 axial und verhindert damit, dass die Zahnradbleche 50 sich verbiegen.

Die Gleitlagerbuchsen 46, 48 können als hydrodynamische Gleitlager ausgebildet sein, die im Betrieb mit ausreichend Schmierfluid versorgt werden müssen. Das Schmierfluid kann von einem zentralen Schmierfluidkanal 54 im ersten und zweiten Radbolzen 30, 32 über Radialkanäle in den Radbolzen 30, 32 zu den Gleitlagerbuchsen 46, 48 zugeführt werden.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen. Insbesondere sind die Merkmale der Unteransprüche auch unabhängig von sämtlichen Merkmalen des unabhängigen Anspruchs 1 und beispielsweise unabhängig von den Merkmalen bezüglich des Vorhandenseins und der Konfiguration des ersten Radteils und/oder des zweiten Radteils des unabhängigen Anspruchs 1 offenbart.

### Bezugszeichenliste

- 10: Rädertrieb
- 12: Antriebsrad
- 14: Zwischenrad
- 16: Abtriebsrad
- 18: Radbolzen
- 20: Kurbelwelle
- 22: Radbolzen
- 24: Nebenverbraucher
- 26: Erster Radteil
- 28: Zweiter Radteil
- 30: Erster Radbolzen
- 32: Zweiter Radbolzen
- 34: Schraube
- 36: Zähne
- 36A: Erste Lastflanke
- 36B: Zweite Lastflanke
- 38: Zähne
- 38A: Lastflanke
- 38B: Rückflanke
- 40: Zähne
- 40A: Lastflanke
- 40B: Rückflanke
- 42: Zähne
- 42A: Erste Zahnflanke
- 42B: Zweite Zahnflanke
- 44: Elastischer Bereich (Langlöcher)
- 46: Erste Gleitlagerbuchse
- 48: Zweite Gleitlagerbuchse
- 50: Zahnradblech
- 52: Anlaufscheibe
- 54: Schmierfluidkanal

- A: Erste Achse
- B: Zweite Achse
- C: Pfeil entlang der Winkelhalbierenden
- D: Drehrichtung

## Patentansprüche

1. Rädertrieb (10) für ein Kraftfahrzeug, aufweisend:
ein Zwischenrad (14) zur Zahnflankenspielverringerung und/oder Zahnflankenspielkompensation in dem Rädertrieb (10), wobei das Zwischenrad (14) aufweist:
- einen ersten Radteil (26) mit mehreren Zähnen (36), die über einen Umfang des ersten Radteils (26) verteilt sind, wobei der erste Radteil (26) um eine erste Achse (A) drehbar ist; und
- einen zweiten Radteil (28) mit mehreren Zähnen (42), die über einen Umfang des zweiten Radteils (28) verteilt sind, wobei der zweite Radteil (28) um eine zweite Achse (B), die parallel versetzt zur ersten Achse (A) angeordnet ist, drehbar ist;
ein Antriebsrad (12), das mit dem ersten Radteil (26) des Zwischenrads (14) und dem zweiten Radteil (28) des Zwischenrads (14) kämmt; und
ein Abtriebsrad (16), das mit dem ersten Radteil (26) des Zwischenrads (14) und dem zweiten Radteil (28) des Zwischenrads (14) kämmt.

2. Rädertrieb (10) nach Anspruch 1, wobei:
der zweite Radteil (28) bereichsweise in einer Radialrichtung bezüglich der zweiten Achse (B) elastisch verformbar ist; und/oder
der zweite Radteil (28) relativ zum ersten Radteil (26) drehbar ist.

3. Rädertrieb (10) nach Anspruch 1 oder 2, wobei:
der zweite Radteil (28) mindestens ein Zahnradblech (50) aufweist, wobei das mindestens eine Zahnradblech (50) in einer Radialrichtung bezüglich der zweiten Achse (B) elastisch verformbar ist.

4. Rädertrieb (10) nach Anspruch 3, wobei:
mehrere Zahnradbleche (50) vorgesehen sind, die nebeneinander angeordnet sind und insbesondere ein Zahnradblechpaket bilden.

5. Rädertrieb (10) nach Anspruch 3 oder Anspruch 4, wobei:
das mindestens eine Zahnradblech (50) aus einem Federstahl hergestellt ist.

6. Rädertrieb (10) nach einem der Ansprüche 3 bis 5, wobei:
das mindestens eine Zahnradblech (50) zum Vorsehen einer Elastizität des zweiten Radteils (28) mindestens ein Langloch (44), vorzugsweise mehrere Langlöcher, aufweist, wobei sich das mindestens eine Langloch (44) in einer Umfangsrichtung um die zweite Achse (B), insbesondere kreisförmig und/oder spiralförmig, erstreckt.

7. Rädertrieb (10) nach einem der vorherigen Ansprüche, ferner aufweisend:
einen erster Radbolzen (30), um den der erste Radteil (26) drehbar gelagert ist; und
einen zweiten Radbolzen (32), um den der zweite Radteil (28) drehbar gelagert ist,
wobei der erste Radbolzen (30) und der zweite Radbolzen (32) aneinander exzentrisch zueinander befestigt sind, insbesondere über eine Presspassung oder eine Schraubenverbindung.

8. Rädertrieb (10) nach Anspruch 7, ferner aufweisend:
eine erste Gleitlagerbuchse (46), die zwischen dem ersten Radbolzen (30) und dem ersten Radteil (26) angeordnet ist; und
eine zweite Gleitlagerbuchse (48), die zwischen dem zweiten Radbolzen (32) und dem zweiten Radteil (28) angeordnet ist.

9. Rädertrieb (10) nach einem der vorherigen Ansprüche, wobei:
der zweite Radteil (28) des Zwischenrads (14) von dem Antriebsrad (12), insbesondere von Rückflanken (38B) des Antriebsrads (12), und dem Abtriebsrad (16), insbesondere von Rückflanken (40B) des Abtriebsrads (16), in einer Richtung zu der zweiten Achse (B), insbesondere elastisch, verspannt ist; und/oder
Lastflanken (38A) des Antriebsrads (12) und Lastflanken (40A) des Abtriebsrads (16) in Eingriff mit dem ersten Radteil (26) sind, und Rückflanken (38B) des Antriebsrads (12) und Rückflanken (40B) des Abtriebsrads (16) in Eingriff mit dem zweiten Radteil (28) sind.

10. Rädertrieb (10) nach einem der vorherigen Ansprüche, wobei:
die zweite Achse (B) bezüglich der ersten Achse (A) in einer Richtung einer Winkelhalbierenden bezüglich eines Winkels, der zwischen einer Drehachse des Antriebsrads (12), der ersten Achse (A) und einer Drehachse des Abtriebsrads (16) definiert ist, versetzt angeordnet ist.

11. Rädertrieb (10) nach einem der vorherigen Ansprüche, wobei:
die mehreren Zähne (36) des ersten Radteils (26) Lastflanken (38A) des Antriebszahnrads (12) und Lastflanken (40A) des Abtriebszahnrads (16) kontaktieren; und
die mehreren Zähne (42) des zweiten Radteils (28) Rückflanken (38B) des Antriebszahnrads (12) und Rückflanken (40B) des Abtriebszahnrads (16) kontaktieren.

12. Rädertrieb (10) nach einem der vorherigen Ansprüche, wobei:
durch eine Verspannung des zweiten Radteils (28), die insbesondere aus der versetzten Anordnung zwischen dem ersten Radteil (26) und dem zweiten Radteil (28) und einer Elastizität des zweiten Radteils (28) resultiert, einem Abheben der mehreren Zähne (36) des ersten Radteils (26) von Lastflanken (38A) des Antriebsrads (12) und von Lastflanken (40A) des Abtriebsrads (16) bei einem Vorzeichenwechsel des Antriebsmoments- und/oder des Abtriebsmoments und/oder bei Drehschwingungen entgegenwirkt wird.

13. Rädertrieb (10) nach einem der vorherigen Ansprüche, wobei:
mehrere Abtriebsräder (16) vorgesehen sind, die mit dem Zwischenrad (14) kämmen; und
für jedes Abtriebsrad (16) ein weiterer Radteil des Zwischenrads (14) vorgesehen ist, der jeweils entsprechend dem zweiten Radteil (28) des Zwischenrads (14) ausgebildet ist.

14. Kraftfahrzeug, insbesondere Nutzfahrzeug, aufweisend:
einen Rädertrieb (10) nach einem der vorherigen Ansprüche.

15. Kraftfahrzeug nach Anspruch 14, aufweisend:
einen Verdichter (24) zum Verdichten von Luft, der über den Rädertrieb (10) angetrieben wird.

## Claims

1. Gear train (10) for a motor vehicle, comprising:
an idler gear (14) for reducing backlash and/or compensating for backlash in the gear train (10), wherein the idler gear (14) comprises:
- a first gear part (26) having multiple teeth (36) that are distributed over a periphery of the first gear part (26), wherein the first gear part (26) is rotatable about a first axis (A); and
- a second gear part (28) having multiple teeth (42) that are distributed over a periphery of the second gear part (28), wherein the second gear part (28) is rotatable about a second axis (B) that is arranged parallel to and offset with respect to the first axis (A);
a drive gear (12) that meshes with the first gear part (26) of the idler gear (14) and the second gear part (28) of the idler gear (14); and
an output gear (16) that meshes with the first gear part (26) of the idler gear (14) and the second gear part (28) of the idler gear (14).

2. Gear train (10) according to Claim 1, wherein:
the second gear part (28) is deformable in regions in an elastic manner in a radial direction in relation to the second axis (B); and/or
the second gear part (28) is rotatable relative to the first gear part (26).

3. Gear train (10) according to Claim 1 or 2, wherein:
the second gear part (28) comprises at least one toothed gear sheet (50), wherein the at least one toothed gear sheet (50) is deformable in an elastic manner in a radial direction in relation to the second axis (B).

4. Gear train (10) according to Claim 3, wherein:
multiple toothed gear sheets (50) are provided that are arranged adjacent to one another and in particular form a toothed gear sheet stack.

5. Gear train (10) according to Claim 3 or Claim 4, wherein:
the at least one toothed gear sheet (50) is produced from a spring steel.

6. Gear train (10) according to any one of Claims 3 to 5, wherein:
the at least one toothed gear sheet (50) comprises at least one elongated hole (44), preferably multiple elongated holes, so as to provide an elasticity of the second gear part (28), wherein the at least one elongated hole (44) extends in a peripheral direction about the second axis (B), in particular in a circular and/or helical manner.

7. Gear train (10) according to any one of the preceding claims, moreover comprising:
a first wheel stud (30) about which the first gear part (26) is mounted in a rotatable manner; and
a second wheel stud (32) about which the second gear part (28) is mounted in a rotatable manner,
wherein the first wheel stud (30) and the second wheel stud (32) are fastened to one another in an eccentric manner with respect to one another, in particular via a press fit arrangement or a screw connection.

8. Gear train (10) according to Claim 7, moreover comprising:
a first plain bearing bush (46) that is arranged between the first wheel stud (30) and the first gear part (26) ; and
a second plain bearing bush (48) that is arranged between the second wheel stud (32) and the second gear part (28).

9. Gear train (10) according to any one of the preceding claims, wherein:
the second gear part (28) of the idler gear (14) is braced by the drive gear (12), in particular by trailing flanks (38B) of the drive gear (12), and the output gear (16), in particular by trailing flanks (40B) of the output gear (16), in a direction with respect to the second axis (B), in particular in an elastic manner; and/or
load flanks (38A) of the drive gear (12) and load flanks (40A) of the output gear (16) are in engagement with the first gear part (26), and trailing flanks (38B) of the drive gear (12) and trailing flanks (40B) of the output gear (16) are in engagement with the second gear part (28).

10. Gear train (10) according to any one of the preceding claims, wherein:
the second axis (B) is arranged offset in relation to the first axis (A) in a direction of an angle bisector in relation to an angle that is defined between an axis of rotation of the drive gear (12), the first axis (A) and an axis of rotation of the output gear (16).

11. Gear train (10) according to any one of the preceding claims, wherein:
the multiple teeth (36) of the first gear part (26) contact load flanks (38A) of the drive toothed gear (12) and load flanks (40A) of the output toothed gear (16); and
the multiple teeth (42) of the second gear part (28) contact trailing flanks (38B) of the drive toothed gear (12) and trailing flanks (40B) of the output toothed gear (16) .

12. Gear train (10) according to any one of the preceding claims, wherein:
a lifting of the multiple teeth (36) of the first gear part (26) from load flanks (38A) of the drive gear (12) and from load flanks (40A) of the output gear (16) in the case of a change of sign of the drive torque and/or of the output torque and/or in the case of rotational oscillations is counteracted by bracing of the second gear part (28), said bracing resulting in particular from the offset arrangement between the first gear part (26) and the second gear part (28) and an elasticity of the second gear part (28).

13. Gear train (10) according to any one of the preceding claims, wherein:
multiple output gears (16) are provided that mesh with the idler gear (14); and
a further gear part of the idler gear (14) is provided for each output gear (16), said further gear part being embodied in each case correspondingly to the second gear part (28) of the idler gear (14).

14. Motor vehicle, in particular commercial vehicle, comprising:
a gear train (10) according to any one of the preceding claims.

15. Motor vehicle according to Claim 14, comprising:
a compressor (24) for compressing air, which compressor is driven via the gear train (10).

## Revendications

1. Entraînement par engrenage (10) pour un véhicule automobile, comprenant :
une roue intermédiaire (14) pour la réduction du jeu entre-dents et/ou la compensation du jeu entre-dents dans l'entraînement par engrenage (10), dans lequel la roue intermédiaire (14) comprend :
- une première partie de roue (26) dotée de plusieurs dents (36) qui sont réparties sur une périphérie de la première partie de roue (26), dans lequel la première partie de roue (26) est rotative autour d'un premier axe (A) ; et
- une deuxième partie de roue (28) dotée de plusieurs dents (42) qui sont réparties sur une périphérie de la deuxième partie de roue (28), dans lequel la deuxième partie de roue (28) est rotative autour d'un deuxième axe (B) qui est disposé de manière décalée parallèlement par rapport au premier axe (A) ;
une roue d'entraînement (12) qui s'engrène avec la première partie de roue (26) de la roue intermédiaire (14) et avec la deuxième partie de roue (28) de la roue intermédiaire (14) ; et
une roue de sortie (16) qui s'engrène avec la première partie de roue (26) de la roue intermédiaire (14) et avec la deuxième partie de roue (28) de la roue intermédiaire (14).

2. Entraînement par engrenage (10) selon la revendication 1, dans lequel :
la deuxième partie de roue (28) est déformable élastiquement dans certaines zones dans une direction radiale par rapport au deuxième axe (B) ; et/ou la deuxième partie de roue (28) est rotative par rapport à la première partie de roue (26).

3. Entraînement par engrenage (10) selon la revendication 1 ou 2, dans lequel :
la deuxième partie de roue (28) comprend au moins une tôle de roue dentée (50), dans lequel l'au moins une tôle de roue dentée (50) est déformable élastiquement dans une direction radiale par rapport au deuxième axe (B).

4. Entraînement par engrenage (10) selon la revendication 3, dans lequel :
plusieurs tôles de roue dentée (50) sont prévues, lesquelles sont juxtaposées et forment en particulier un groupe de tôles de roue dentée.

5. Entraînement par engrenage (10) selon la revendication 3 ou 4, dans lequel :
l'au moins une tôle de roue dentée (50) est fabriquée à partir d'un acier à ressorts.

6. Entraînement par engrenage (10) selon l'une des revendications 3 à 5, dans lequel :
l'au moins une tôle de roue dentée (50) comprend, pour produire une élasticité de la deuxième partie de roue (28), au moins un trou oblong (44), de préférence plusieurs trous oblongs, dans lequel l'au moins un trou oblong (44) s'étend dans une direction périphérique autour du deuxième axe (B), en particulier de manière circulaire et/ou en spirale.

7. Entraînement par engrenage (10) selon l'une des revendications précédentes, comprenant en outre :
un premier axe de roue (30) autour duquel la première partie de roue (26) est montée rotative ; et
un deuxième axe de roue (32) autour duquel la deuxième partie de roue (28) est montée rotative,
dans lequel le premier axe de roue (30) et le deuxième axe de roue (32) sont fixés l'un à l'autre de manière excentrique l'un par rapport à l'autre, en particulier par un ajustement forcé ou une liaison par vissage.

8. Entraînement par engrenage (10) selon la revendication 7, comprenant en outre :
un premier coussinet de palier lisse (46) qui est disposé entre le premier axe de roue (30) et la deuxième partie de roue (26) ; et
un deuxième coussinet de palier lisse (48) qui est disposé entre le deuxième axe de roue (32) et la deuxième partie de roue (28).

9. Entraînement par engrenage (10) selon l'une des revendications précédentes, dans lequel :
la deuxième partie de roue (28) de la roue intermédiaire (14) est serrée, en particulier élastiquement, par la roue d'entraînement (12), en particulier par des flancs arrière (38B) de la roue d'entraînement (12), et par la roue de sortie (16), en particulier par des flancs arrière (40B) de la roue de sortie (16), dans une direction par rapport au deuxième axe (B) ; et/ou des flancs de charge (38A) de la roue d'entraînement (12) et des flancs de charge (40A) de la roue de sortie (16) sont en prise avec la première partie de roue (26), et des flancs arrière (38B) de la roue d'entraînement (12) et des flancs arrière (40B) de la roue de sortie (16) sont en prise avec la deuxième partie de roue (28).

10. Entraînement par engrenage (10) selon l'une des revendications précédentes, dans lequel :
le deuxième axe (B) est disposé de manière décalée par rapport au premier axe (A) dans une direction d'une bissectrice par rapport à un angle qui est défini entre un axe de rotation de la roue d'entraînement (12), le premier axe (A) et un axe de rotation de la roue de sortie (16).

11. Entraînement par engrenage (10) selon l'une des revendications précédentes, dans lequel :
les multiples dents (36) de la première partie de roue (26) viennent en contact avec des flancs de charge (38A) de la roue dentée d'entraînement (12) et des flancs de charge (40A) de la roue dentée de sortie (16) ; et
les multiples dents (42) de la deuxième partie de roue (28) viennent en contact avec des flancs arrière (38B) de la roue dentée d'entraînement (12) et des flancs arrière (40B) de la roue dentée de sortie (16).

12. Entraînement par engrenage (10) selon l'une des revendications précédentes, dans lequel :
un serrage de la deuxième partie de roue (28), qui résulte en particulier de l'agencement décalé entre la première partie de roue (26) et la deuxième partie de roue (28) et d'une élasticité de la deuxième partie de roue (28), s'oppose à un soulèvement des multiples dents (36) de la première partie de roue (26) de flancs de charge (38A) de la roue d'entraînement (12) et de flancs de charge (40A) de la roue de sortie (16) en cas de changement de signe du couple d'entraînement et/ou du couple de sortie et/ou en cas d'oscillations de torsion.

13. Entraînement par engrenage (10) selon l'une des revendications précédentes, dans lequel :
plusieurs roues de sortie (16) sont prévues, lesquelles s'engrènent avec la roue intermédiaire (14) ; et
pour chaque roue de sortie (16) il est prévu une autre partie de roue de la roue intermédiaire (14) qui est réalisée respectivement de manière correspondante à la deuxième partie de roue (28) de la roue intermédiaire (14).

14. Véhicule automobile, en particulier véhicule utilitaire, comprenant :
un entraînement par engrenage (10) selon l'une des revendications précédentes.

15. Véhicule automobile selon la revendication 14, comprenant :
un compresseur (24) servant à comprimer de l'air, lequel compresseur est entraîné par le biais de l'entraînement par engrenage (10).
